# FASCICULE DE BREVET EUROPEEN

(11) **EP 1 574 285 B1**
(45) Date de publication et mention de la délivrance du brevet: **27.02.2008**
(21) Numéro de dépôt: 04100936.6
(22) Date de dépôt: 08.03.2004
(51) Int. Cl.: B23Q 7/04, B23B 13/02

(54) **Appareil pour l'asservissement de deux mécanismes distincts de déplacement en translation d'une même barre**
Regeleinrichtung für zwei getrennte Stangenzuführvorrichtungen
Controlling device for two seperate bar feeding mechanisms

(43) Date de publication de la demande: 14.09.2005
(73) Titulaire: LNS S.A., 2534 Orvin (CH)
(72) Inventeur: Schärer, Rolf, 2534, Orvin (CH)
(74) Mandataire: Scheuzger, Beat Otto

(56) Documents cités:
- EP-A- 1 291 127
- EP-A- 1 396 300
- US-A- 5 662 014

## Description

L'invention se rapporte à un appareil pour l'asservissement de deux mécanismes de déplacement en translation d'une barre, dont
. un premier mécanisme de déplacement en translation situé dans une machine d'usinage par tournage, cette machine d'usinage étant destinée à produire, par la répétition d'un cycle d'usinage préétabli, une pluralité de pièces profilées dont la longueur correspond à une fraction de la longueur de la barre, et
. un second mécanisme de déplacement en translation situé dans une installation de chargement séquentiel de telles barres dans une partie rotative tubulaire de la machine d'usinage par tournage.

Un tel appareil est connu, par exemple, de US 5662014.

L'invention se rapporte également à un ensemble qui, constitué par une machine d'usinage et une installation de chargement de barres dans cette machine d'usinage par tournage, comprend un appareil d'asservissement du type précité.

Dans le domaine de la fabrication mécanique, il est connu de produire des pièces sur des machines de tournage automatiques, à partir de barres de matériau, et ce, en procédant à des usinages successifs sur des portions longitudinales de ces barres.

Il est également connu d'utiliser une installation de chargement pour, après épuisement d'une barre par usinage dans une machine d'usinage par tournage, placer, puis pousser automatiquement une nouvelle barre dans ladite machine d'usinage.

Les installations de chargement du type précité qui servent au ravitaillement de telles machines automatiques de tournage, utilisées en production industrielle, sont connues sous le nom de « ravitailleurs ».

L'invention intéresse plus particulièrement, mais non exclusivement, un appareil pour la synchronisation de deux mécanismes de déplacement en translation de barres, dont
. un premier mécanisme de déplacement en translation situé dans une machine d'usinage par tournage et dite à "poupée mobile", cette machine d'usinage par tournage étant destinée à produire, par la répétition d'un cycle d'usinage préétabli, une pluralité de pièces profilées dont la longueur correspond à une fraction de la longueur de la barre, et
. un second mécanisme de déplacement en translation situé dans une installation de chargement séquentiel de telles barres dans une partie rotative tubulaire de la poupée mobile.

Une machine d'usinage dite à "poupée mobile" est une machine d'usinage équipée d'un premier mécanisme essentiellement constitué :
- d'un ensemble mécanique qui, dit poupée mobile,
   . est guidé en translation selon un axe de translation sur la machine d'usinage, notamment sur des glissières, et
   . comprend une partie tubulaire qui, entraînée en rotation autour d'un axe de rotation parallèle à l'axe de translation, reçoit une partie extrême de la barre et porte une pince de maintien radial de cette partie extrême,
- d'un moyen moteur qui, dit premier moyen moteur, est commandé par un premier moyen de commande, et ce, suivant deux sens opposés afin qu'au cours de chaque cycle d'usinage d'une pièce, cependant que la pince reste fermée, l'ensemble mécanique, dit poupée mobile, puisse être animé de mouvements de translation, sensiblement selon l'axe de cette barre.

Une installation de chargement de barres dans une machine d'usinage dite à poupée mobile doit donc autoriser de tels mouvements de la barre chargée dans la machine.

Il s'avère qu'une installation de chargement de barres comprend notamment :
- un premier dispositif destiné à assurer une fonction combinant des actions de soutien et de guidage d'une barre, notamment pendant sa rotation, et ce, au cours d'un déplacement en translation de cette barre selon un axe déterminé, dit axe de guidage, notamment sensiblement coaxial à la partie rotative tubulaire de la machine d'usinage qui doit être traversée par ladite barre, afin d'être présentée à un système d'outils situé dans cette machine,
- un deuxième dispositif destiné à assurer une fonction de stockage d'une pluralité de barres,
- un troisième dispositif destiné à assurer des fonctions de sélection et de prélèvement d'une barre dans ce magasin, puis de placement de cette barre dans le dispositif de guidage en translation,
- un mécanisme de déplacement en translation, dit second mécanisme de déplacement en translation, destiné à assurer, par le biais d'au moins une butée maintenue en appui contre la barre, des fonctions de déplacement en translation de cette barre chargée dans le dispositif de guidage et, notamment, de manière à pouvoir assurer sélectivement,
   . le déplacement de cette barre, au moins dans le dispositif de guidage, de manière à la disposer dans une position dite d'attente de chargement,
   . la poussée de la barre, par séquence, à la fois à travers ledit dispositif de guidage et la partie rotative tubulaire de la machine d'usinage, depuis ladite position dite d'attente de chargement jusqu'à ce qu'un nombre déterminé de pièces ait été réalisé,
   . l'extraction de la partie rotative tubulaire d'un tronçon de barre qui n'aurait pas été utilisé dans la machine d'usinage,
   . le déplacement dudit tronçon non utilisé jusqu'à une dernière position, telle celle d'un poste d'évacuation de ce tronçon,
- un quatrième dispositif destiné à assurer la commande programmable des dispositifs et du mécanisme précités.

Tel que cela a été indiqué plus avant, dans le cas d'une machine à poupée mobile, lors de l'usinage, les mouvements de translation de la poupée mobile induisent le déplacement de la barre, à l'insu dudit second mécanisme de déplacement en translation interne à l'installation de chargement.

Lorsque la barre a une section transversale réduite elle est particulièrement sujette au fléchissement, voire au flambage, lors du recul de la poupée.

Les constructeurs d'installations de chargement qui doivent être utilisées pour charger des barres dans des machines d'usinage à poupée mobile ont dû prévoir une solution technique qui autorise des translations de la barre dans l'installation de chargement, sous l'effet des mouvements de la poupée mobile.

Une solution technique connue consiste à, d'une part, constituer une liaison rigide entre la poupée mobile et un élément actif du second mécanisme de déplacement en translation interne à l'installation et, d'autre part, à placer cette liaison sous le contrôle d'un moyen de débrayage commandé, de manière telle que seuls les mouvements de recul de la poupée mobile soient transmis au second mécanisme de déplacement en translation interne à l'installation de chargement.

Il s'avère que le débrayage recherché n'est obtenu qu'après un temps de réaction relativement important, ce qui peut générer des à-coups préjudiciables à la qualité de l'usinage et/ou au fonctionnement des différents dispositifs et mécanismes impliqués, que ce soit dans l'installation de chargement ou dans la machine d'usinage.

Un résultat que l'invention vise à obtenir est un appareil qui permet de remédier à ces inconvénients.

A cet effet, l'invention a pour objet un appareil pour l'asservissement de deux mécanismes de déplacement en translation d'une barre, dont
- un premier mécanisme de guidage en translation essentiellement constitué :
   . d'un ensemble mécanique qui, dit poupée mobile,
      .. est guidé en translation selon un axe de translation sur la machine d'usinage, notamment sur des glissières, et
      .. comprend une partie tubulaire qui, entraînée en rotation autour d'un axe de rotation parallèle à l'axe de translation, reçoit une partie extrême de la barre et porte une pince de maintien radial de cette partie extrême,
   . d'un moyen moteur qui, dit premier moyen moteur, est commandé par un premier moyen de commande, et ce, suivant deux sens opposés, afin qu'au cours de chaque cycle d'usinage d'une pièce, cependant que la pince reste fermée, l'ensemble mécanique, dit poupée mobile, puisse être animé de mouvements de translation, sensiblement selon l'axe de cette barre,
- un second mécanisme de guidage en translation, destiné à assurer des fonctions de déplacement en translation d'une barre de manière à pouvoir obtenir, notamment, la poussée de la barre, par séquence, à travers la partie rotative tubulaire, jusqu'à ce qu'un nombre déterminé de pièces ait été réalisé, le second mécanisme de déplacement en translation interne à l'installation de chargement comportant un moyen moteur, dit second moyen moteur, du type commandé par pas.

De manière remarquable, l'appareil selon l'invention comprend :
- un premier élément consistant en une règle allongée qui comporte une pluralité de repères successivement disposés selon sa dimension longitudinale, pour définir un pas déterminé et indiquer de manière distincte deux sens opposés de lecture de ce premier élément selon sa dimension longitudinale,
- un deuxième élément consistant en un détecteur de repères
portés par le premier élément, ce deuxième élément, d'une part, détectant chaque pas d'un déplacement relatif entre le premier élément et le deuxième élément, ainsi que le sens de ce déplacement et, d'autre part, élaborant un signal de pas et de sens de déplacement,
- un troisième élément et un quatrième élément chacun de fixation d'un desdits premier élément et deuxième élément, l'un sur la poupée mobile, l'autre sur une partie immobile de l'installation de chargement, lesdits troisième élément et quatrième élément étant disposés de manière telle que tout déplacement en translation de la poupée mobile induit un déplacement relatif en translation entre le premier élément et le deuxième élément, qui est de valeur identique et de sens identique à ceux du déplacement relatif de cette poupée mobile,
- un cinquième élément pour appliquer audit second moyen moteur du second mécanisme de déplacement de l'installation de chargement, le signal de pas et de sens de déplacement élaboré au niveau du deuxième élément de manière à commander instantanément ledit second moyen moteur de l'installation de chargement en fonction de chaque pas détecté et du sens de déplacement détecté.

L'invention a également pour objet un ensemble constitué par une machine d'usinage et une installation de chargement de barres dans cette machine d'usinage, cet ensemble étant remarquable en ce qu'il comprend un appareil d'asservissement du type précité.

L'invention sera bien comprise à la lecture de la description ci-après faite à titre d'exemple non limitatif, en regard du dessin ci-annexé qui représente schématiquement :

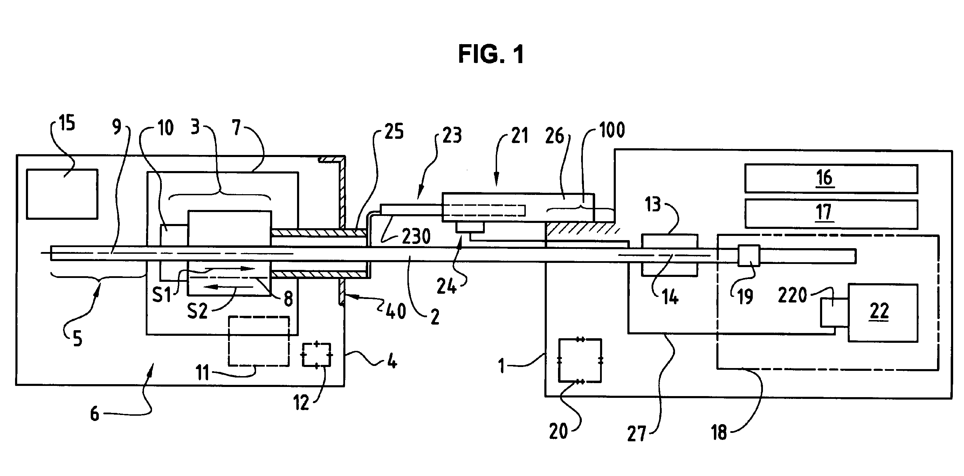

- figure 1, vu en coupe selon un plan longitudinal vertical, un ensemble comprenant une machine d'usinage à poupée mobile et une installation de chargement de barres dans cette machine d'usinage, l'installation et la machine étant équipés d'un appareil selon l'invention,

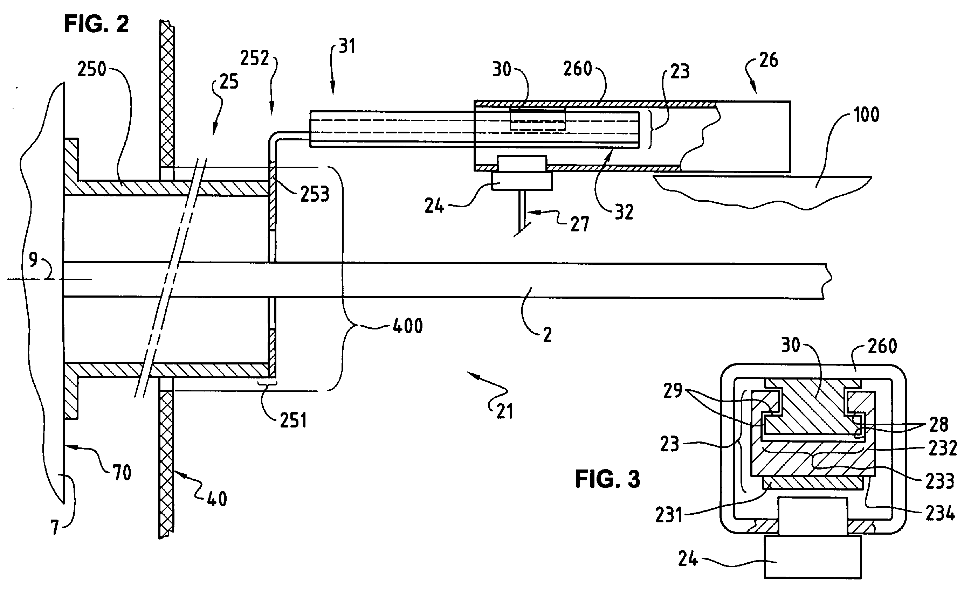

- figure 2, vu en coupe longitudinale partielle et à plus grande échelle, un appareil selon l'invention,
- figure 3, une vue en coupe transversale et à plus grande échelle d'une partie fonctionnelle de l'appareil représenté en figure 2.

En se reportant au dessin, on voit une installation de chargement séquentiel de barres 2 de matériau dans une partie rotative tubulaire 3 d'une machine d'usinage 4 de ces barres 2, telle une machine de tournage, de manière à produire, par la répétition d'un cycle d'usinage préétabli, une pluralité de pièces 5 profilées dont la longueur correspond à une fraction de la longueur de la barre 2.

L'installation de chargement séquentiel de barres 2 de matériau est ci-après dite installation de chargement 1.

La machine d'usinage 4 est une machine d'usinage dite à "poupée mobile", à savoir une machine d'usinage 4 équipée d'un mécanisme 6 de déplacement en translation, dit premier mécanisme 6 de déplacement en translation essentiellement constitué :
- d'un ensemble mécanique qui, dit poupée mobile 7,
   . est guidé en translation sur la machine d'usinage 4, selon un axe de translation 8, notamment sur des glissières (non représentées), et
   . comprend une partie tubulaire 3 qui, entraînée en rotation autour d'un axe de rotation 9 parallèle à l'axe de translation 8, reçoit une partie extrême de la barre 2 et porte une pince 10 de maintien radial de cette partie extrême,
- d'un moyen moteur 11 qui, dit premier moyen moteur 11, est commandé par un premier moyen de commande 12, et ce, suivant deux sens opposés S1, S2 afin qu'au cours de chaque cycle d'usinage d'une pièce 5, cependant que la pince 10 reste fermée, l'ensemble mécanique, dit poupée mobile 7, puisse être animé de mouvements de translation, sensiblement selon l'axe de translation 8.

L'installation de chargement 1 de barres 2 comprend avantageusement, mais non limitativement :
- un premier dispositif 13, dit de guidage en translation, destiné à assurer une fonction combinant des actions de soutien et de guidage d'une barre 2, notamment pendant sa rotation, et ce, au cours d'un déplacement en translation de cette barre 2 selon un axe déterminé 14, dit axe de guidage 14, notamment sensiblement coaxial à celui 9 de la partie rotative tubulaire 3 de la machine d'usinage 4 qui doit être traversée par ladite barre 2, afin d'être présentée à un système d'outils 15 situé dans cette machine d'usinage 4,
- un deuxième dispositif 16 destiné à assurer une fonction de stockage d'une pluralité de barres 2,
- un troisième dispositif 17 destiné à assurer des fonctions de sélection et de prélèvement d'une barre 2 dans le deuxième dispositif 16 dit dispositif de stockage, puis de placement de cette barre 2 dans le premier dispositif 13 dit de guidage en translation,
- un mécanisme de déplacement en translation 18, dit second mécanisme de déplacement en translation 18 et, destiné à assurer des fonctions de déplacement en translation de la barre 2 chargée dans le premier dispositif 13 de guidage en translation et, notamment, de manière à pouvoir, par le biais d'au moins une butée 19 maintenue en appui contre cette barre 2, obtenir sélectivement,
   . le déplacement de cette barre 2, au moins dans le premier dispositif 13 de guidage en translation, de manière à la disposer dans une position dite d'attente de chargement,
   . la poussée de la barre 2, par séquence, à la fois à travers ledit premier dispositif 13 de guidage en translation et la partie rotative tubulaire 3, depuis ladite position dite d'attente de chargement jusqu'à ce qu'un nombre déterminé de pièces ait été réalisé,
   . l'extraction de la partie rotative tubulaire 3 d'un tronçon de barre 2 qui n'aurait pas été utilisé dans la machine d'usinage 4,
   . le déplacement dudit tronçon de barre 2 non utilisé jusqu'à un poste d'évacuation de ce tronçon de barre 2,

- un quatrième dispositif 20 destiné à assurer la commande programmable des dispositifs 13, 16, 17 qui sont dits premier (13), deuxième (16) et troisième (17), ainsi que du mécanisme de déplacement en translation 18 précité.

Cette description permet de mieux comprendre qu'une installation de chargement 1 consiste en un ensemble électromécanique complexe dont le fonctionnement est susceptible d'être notablement perturbé, voire altéré, par des actions extérieures, telles les actions de déplacement imposées à la barre 2 par une poupée mobile 7, au cours d'un cycle d'usinage d'une pièce 5.

Par cycle d'usinage, on désigne une succession d'opérations d'usinage qui sont réalisées par des déplacements relatifs entre la barre 2 et au moins un outil d'un système d'outils 15 situé dans la machine d'usinage 4.

Dans le cas de l'invention, on considèrera que l'installation de chargement 1 comprend, au minimum, au moins un mécanisme de déplacement en translation 18, dit second mécanisme de déplacement de translation 18, destiné à assurer des fonctions de déplacement en translation d'une barre 2 de manière à pouvoir, notamment par le biais d'au moins une butée 19 maintenue en appui contre cette barre 2, obtenir, notamment, la poussée de la barre 2, par séquence, à travers la partie rotative tubulaire 3, jusqu'à ce qu'un nombre déterminé de pièces 5 ait été réalisé.

Tel que cela a été annoncé, l'invention concerne un appareil 21 qui autorise des translations de la barre 2 dans l'installation de chargement 1, sous l'effet des mouvements de la poupée mobile 7, sans qu'il en résulte les inconvénients connus.

Le second mécanisme de déplacement en translation 18, interne à l'installation de chargement 1 est du type comportant un moyen moteur 22 du type commandé par pas, connu sous le nom de servomoteur.

De manière remarquable, l'appareil 21 selon l'invention comprend :
- un premier élément 23 consistant en une règle allongée qui comporte au moins une pluralité de repères 230 successivement disposés selon sa dimension longitudinale, pour définir un pas déterminé et indiquer de manière distincte deux sens opposés S1, S2 de lecture de ce premier élément 23 selon sa dimension longitudinale,
- un deuxième élément 24 consistant en un détecteur de repères 230 portés par le premier élément 23, ce deuxième élément 24, d'une part, détectant chaque pas d'un déplacement relatif entre le premier élément 23 et le deuxième élément 24, ainsi que le sens de ce déplacement et, d'autre part, élaborant un signal de pas et de sens de déplacement,
- un troisième élément 25 et un quatrième élément 26 chacun de fixation d'un desdits premier élément 23 et deuxième élément 24, l'un sur la poupée mobile 7, l'autre sur une partie immobile 100 de l'installation de chargement 1, lesdits troisième élément 25 et quatrième élément 26 étant disposés de manière telle que tout déplacement en translation de la poupée mobile 7 induit un déplacement relatif en translation entre le premier élément 23 et le deuxième élément 24, qui est de valeur identique et de sens identique à ceux du déplacement relatif de cette poupée mobile 7,
- un cinquième élément 27 pour appliquer audit second moyen 22 moteur du second mécanisme de déplacement en translation 18, interne à l'installation de chargement 1, le signal de pas et de sens de déplacement élaboré au niveau du deuxième élément 24 de manière à commander instantanément ledit second moyen 22 moteur de l'installation de chargement 1 en fonction de chaque pas détecté et du sens de déplacement détecté.

Avantageusement, le premier élément, à savoir la règle, a un pas d'un centième de millimètre par impulsion (avantageusement un système à deux canaux décalés de quatrevingt dix degrés).

Sur les dessins les repères n'ont pas été représentés et la référence 230 évoque simplement leur présence sur le premier élément.

Le cinquième élément 27 consiste en un organe de transmission du signal de pas et de sens de déplacement.

Par exemple ce cinquième élément 27 consiste en un ou plusieurs câbles de liaison électrique à un boîtier de commande 220 du second moyen moteur 22 de type commandé par pas (servomoteur) dudit second mécanisme de déplacement en translation 18, interne à l'installation de chargement 1.

La partie immobile 100 de l'installation de chargement 1 est, par exemple, constituée par une partie structurelle de cette installation.

De par sa constitution, l'appareil 21 selon l'invention permet l'obtention du résultat visé, à savoir, une réelle synchronisation des mouvements de la poupée mobile 7 de la machine d'usinage 4 et du second mécanisme de déplacement en translation 18, interne à l'installation de chargement 1.

De ce fait, on constate l'absence d'à-coups préjudiciables à la qualité de l'usinage et/ou au fonctionnement des différents mécanismes impliqués, que ce soit dans l'installation de chargement 1 ou dans la machine d'usinage 4.

Tel que cela apparaît au dessin, le premier élément 23, à savoir la règle, est guidé en translation par rapport au deuxième élément 24, à savoir le détecteur, de manière à garantir son positionnement précis au moins au niveau dudit détecteur.

Du fait que la poupée mobile 7 est guidée en translation et que la machine d'usinage 4 et l'installation de chargement 1 sont immobiles l'une par rapport à l'autre, le guidage en translation du premier élément 23 par rapport au deuxième élément 24 peut apparaître comme surabondant, mais, en fait, il permet de garantir dans le temps la fiabilité de l'appareil 21 selon l'invention.

Selon une forme préférée de réalisation, de manière à réaliser le guidage en translation :
- le premier élément 23, à savoir la règle, d'une part, présente selon sa dimension longitudinale des surfaces parallèles 28 destinées à coopérer avec des surfaces de guidage 29 d'un organe de guidage 30, et, d'autre part, est par l'une des deux extrémités 31, 32 qu'il comporte, reliée au troisième élément 25, et ce, d'une manière rigide,
- le quatrième élément 26 comprend une pièce tubulaire 260, d'une part, dans laquelle se trouve fixé un organe de guidage 30 du premier élément 23 constituée par la règle et, d'autre part, sur cette pièce tubulaire 260, le deuxième élément 24, à savoir, le détecteur, se trouve fixé, sensiblement à un même niveau longitudinal que l'organe de guidage 30 , de manière à être maintenu en regard du premier élément 23 afin de détecter les repères 230 que porte la règle constituant ce premier élément 23.

D'une manière encore remarquable, le troisième élément 25 et le quatrième élément 26 supportent le premier élément 23, à savoir la règle, et le deuxième élément 24, à savoir, le détecteur, au voisinage de la barre 2 qui s'étend entre la machine d'usinage 4 et l'installation de chargement 1.

La barre 2 constitue un obstacle physique et psychologique, qui, d'une certaine manière, permet de préserver la règle et le détecteur de contacts accidentels avec des objets manipulés (non représentés) autour de la machine d'usinage 4 et de l'installation de chargement 1.

De manière préférentielle et remarquable :
- le premier élément 23, à savoir la règle, est constitué,
   . d'une part, d'une partie fonctionnelle 231 qui consiste en une bande de matériau comportant au moins une pluralité de repères 230 successivement disposés selon la dimension longitudinale de la bande, pour définir un pas déterminé et indiquer de manière distincte deux sens opposés S1, S2 de lecture de cette bande selon sa dimension longitudinale,
   . d'autre part, d'une partie structurelle 232 qui consiste en pièce rigide allongée de section transversale profilée de manière à comporter, selon sa dimension longitudinale,
      .. une rainure 233 en "T" qui présente des surfaces parallèles 28 dont au moins certaines sont destinées à coopérer avec des surfaces de guidage 29 d'un organe de guidage 30, et
      .. une face libre 234 d'étendue suffisante pour recevoir la bande constituant la partie fonctionnelle 231,

- l'organe de guidage 30 consiste en une pièce qui a une section transversale en "T" complémentaire à la rainure 233 de la partie structurelle 232 du premier élément 23, lequel organe de guidage 30 s'étend sur une fraction de la dimension longitudinale du premier élément 23.

Tel que cela apparaît au dessin, lorsque la poupée mobile 7 est masquée par une partie 40 de la machine d'usinage 4 qui se trouve située du côté de l'installation de chargement 1 , mais que cette poupée mobile 7 présente une face 70, dite face arrière 70, qui, tournée vers l'installation de chargement 1,
. d'une part, est destinée à être traversée par une barre 2 issue de cette installation de chargement 1 et,
. d'autre part, apparaît à travers une découpe 400 de la machine d'usinage 4 qui est traversée par cette barre 2,
le troisième élément 25 comprend une entretoise tubulaire 250 et rigide, destinée à être fixée sur la face arrière de la poupée mobile 7 de manière à être traversée par la barre 2, laquelle entretoise tubulaire 250 est de longueur au moins suffisante pour présenter une extrémité 251 , dite extrémité libre 251, qui :
- est située à l'extérieur de la machine d'usinage 4 lorsque la face arrière 70 de la poupée mobile 7 est amenée dans une position d'éloignement maximal de l'installation de chargement 1,
- porte une zone de fixation 252 d'au moins l'un des éléments que sont le premier élément 23 et le deuxième élément 24, à savoir, de la règle et du détecteur.

Dans une forme remarquable de réalisation, outre l'entretoise tubulaire 250, le troisième élément 25 comprend une platine 253 qui portée à l'extrémité libre 251 de cette entretoise tubulaire 250, d'une part, est située dans un plan sensiblement orthogonal à un axe longitudinal de ladite entretoise tubulaire 250 et, d'autre part, présente la zone de fixation 252 d'au moins l'un des éléments que sont le premier élément 23 et le deuxième élément 24.

Tel que cela est représenté, c'est, par exemple, le premier élément 23, c'est-à-dire la règle, qui est portée par la platine 253 au moyen d'une équerre et d'organe de fixation appropriés, tels des vis.

Dans le cas représenté, le deuxième élément 24, c'est-à-dire le détecteur, est porté par la pièce tubulaire qui constitue le quatrième élément 26, ce quatrième élément 26 étant lui même porté par une partie immobile 100 de l'installation de chargement 1 , par exemple, par une pièce de structure de cette installation de chargement 1.

## Revendications

1. Appareil pour l'asservissement de deux mécanismes de déplacement en translation d'une barre, dont un premier mécanisme (6) de déplacement en translation situé dans une machine d'usinage (4) par tournage, et un second mécanisme (18) de déplacement en translation situé dans une installation de chargement (1) séquentiel de telles barres (2) dans une partie rotative tubulaire (3) de la machine d'usinage (4),
- ledit premier mécanisme (6) de déplacement en translation étant essentiellement constitué,
. d'un ensemble mécanique qui, dit poupée mobile (7),
.. est guidé en translation sur la machine d'usinage (4), selon un axe de translation (8), et
.. comprend une partie tubulaire (3) qui, entraînée en rotation autour d'un axe de rotation (9) parallèle à l'axe de translation (8), reçoit une partie extrême de la barre (2) et porte une pince (10) de maintien radial de cette partie extrême,
. d'un moyen moteur (11) qui, dit premier moyen moteur (11), est commandé par un premier moyen de commande (12), et ce, suivant deux sens opposés (S1, S2) afin qu'au cours de chaque cycle d'usinage d'une pièce (5), l'ensemble mécanique, dit poupée mobile (7), puisse être animé de mouvements de translation,
- ledit second mécanisme (18) de déplacement en translation,
. étant destiné à assurer des fonctions de déplacement en translation d'une barre (2) de manière à pouvoir, obtenir, notamment, la poussée de la barre (2), par séquence, à travers la partie rotative tubulaire (3), jusqu'à ce qu'un nombre déterminé de pièces (5) ait été réalisé, second mécanisme de déplacement en translation (18), interne à l'installation de chargement (1),
. comportant un moyen moteur (22) du type commandé par pas.
l'appareil (21) pour l'asservissement des deux mécanismes dits premier et second étant **caractérisé en ce qu**'il comprend :
- un premier élément (23) consistant en une règle allongée qui comporte au moins une pluralité de repères (230) successivement disposés selon sa dimension longitudinale, pour définir un pas déterminé et indiquer de manière distincte deux sens opposés (S1, S2) de lecture de ce premier élément (23) selon sa dimension longitudinale,
- un deuxième élément (24) consistant en un détecteur de repères (230) portés par le premier élément (23), ce deuxième élément (24), d'une part, détectant chaque pas d'un déplacement relatif entre le premier élément (23) et le deuxième élément (24), ainsi que le sens de ce déplacement et, d'autre part, élaborant un signal de pas et de sens de déplacement,
- un troisième élément (25) et un quatrième élément (26) chacun de fixation d'un desdits premier élément (23) et deuxième élément (24), l'un sur la poupée mobile (7), l'autre sur une partie immobile (100) de l'installation de chargement (1), lesdits troisième élément (25) et quatrième élément (26) étant disposés de manière telle que tout déplacement en translation de la poupée mobile (7) induit un déplacement relatif en translation entre le premier élément (23) et le deuxième élément (24), qui est de valeur identique et de sens identique à ceux du déplacement relatif de cette poupée mobile (7),
- un cinquième élément (27) pour appliquer audit second moyen (22) moteur du second mécanisme de déplacement en translation (18), interne à l'installation de chargement (1), le signal de pas et de sens de déplacement élaboré au niveau du deuxième élément (24) de manière à commander instantanément ledit second moyen (22) moteur de l'installation de chargement (1 ) en fonction de chaque pas détecté et du sens de déplacement détecté.

2. Appareil selon la revendication 1, **caractérisé en ce que** le premier élément (23), à savoir la règle, est guidé en translation par rapport au deuxième élément (24), à savoir le détecteur, de manière à garantir son positionnement précis au moins au niveau dudit détecteur.

3. Appareil selon la revendication 2, **caractérisé en ce que**, de manière à réaliser le guidage en translation :
- le premier élément (23), à savoir la règle, d'une part, présente selon sa dimension longitudinale des surfaces parallèles (28) destinées à coopérer avec des surfaces de guidage (29) d'un organe de guidage (30), et, d'autre part, est par l'une des deux extrémités (31, 32) qu'il comporte, reliée au troisième élément (25), et ce, d'une manière rigide,
- le quatrième élément (26) comprend une pièce tubulaire (260), d'une part, dans laquelle se trouve fixé un organe de guidage (30) du premier élément (23) constituée par la règle et, d'autre part, sur cette pièce tubulaire (260), le deuxième élément (24), à savoir, le détecteur, se trouve fixé, sensiblement à un même niveau longitudinal que l'organe de guidage (30), de manière à être maintenu en regard du premier élément (23) afin de détecter les repères (230) que porte la règle constituant ce premier élément (23).

4. Appareil selon la revendication 1, **caractérisé en ce que** le troisième élément (25) et le quatrième élément (26) supportent le premier élément (23), à savoir la règle, et le deuxième élément (24), à savoir, le détecteur, au voisinage de la barre (2) qui s'étend entre la machine d'usinage (4) et l'installation de chargement (1).

5. Appareil selon l'une des revendications 1 à 4, **caractérisé en ce que** :
- le premier élément (23), à savoir la règle, est constitué,
.d'une part, d'une partie fonctionnelle (231) qui consiste en une bande de matériau comportant au moins une pluralité de repères (230) successivement disposés selon la dimension longitudinale de la bande, pour définir un pas déterminé et indiquer de manière distincte deux sens opposés (S1, S2) de lecture de cette bande selon sa dimension longitudinale,
. d'autre part, d'une partie structurelle (232) qui consiste en pièce rigide allongée de section transversale profilée de manière à comporter, selon sa dimension longitudinale,
.. une rainure (233) en "T" qui présente des surfaces parallèles (28) dont au moins certaines sont destinées à coopérer avec des surfaces de guidage (29) d'un organe de guidage (30), et
.. une face libre (234) d'étendue suffisante pour recevoir la bande constituant la partie fonctionnelle (231),
- l'organe de guidage (30) consiste en une pièce qui à une section transversale en "T" complémentaire à la rainure (233) de la partie structurelle (232) du premier élément (23), lequel organe de guidage (30) s'étend sur une fraction de la dimension longitudinale du premier élément (23).

6. Appareil selon l'une quelconque des revendications 1 à 5, utilisé avec une machine d'usinage (4) comportant une poupée mobile (7) qui,
. peut être masquée par une partie (40) de cette machine d'usinage (4) située du côté de l'installation de chargement (1),
. présente une face (70), dite face arrière (70), qui, tournée vers l'installation de chargement (1), d'une part, est destinée à être traversée par une barre (2) issue de cette installation de chargement (1) et, d'autre part, apparaît à travers une découpe (400) de la machine d'usinage (4) qui est traversée par cette barre (2),
cet appareil étant **caractérisé en ce que** le troisième élément (25) comprend une entretoise tubulaire (250) et rigide, destinée à être fixée sur la face arrière de la poupée mobile (7) de manière à être traversée par la barre (2), laquelle entretoise tubulaire (250) est de longueur au moins suffisante pour présenter une extrémité (251), dite extrémité libre (251), qui :
- est située à l'extérieur de la machine d'usinage (4) lorsque la face arrière (70) de la poupée mobile (7) est amenée dans une position d'éloignement maximal de l'installation de chargement (1),
- porte une zone de fixation (252) d'au moins l'un des éléments que sont le premier élément (23) et le deuxième élément (24), à savoir, de la règle et du détecteur.

7. Appareil selon la revendication 6, **caractérisé en ce qu**'outre l'entretoise tubulaire (250), le troisième élément (25) comprend une platine (253) qui portée à l'extrémité libre (251) de cette entretoise tubulaire (250), d'une part, est située dans un plan sensiblement orthogonal à un axe longitudinal de ladite entretoise tubulaire (250) et, d'autre part, présente la zone de fixation (252) d'au moins l'un des éléments que sont le premier élément (23) et le deuxième élément (24).

8. Ensemble constitué par une machine d'usinage et une installation de chargement de barres dans cette machine d'usinage par tournage, comprenant un appareil d'asservissement selon l'une quelconque des revendications 1 à 7.

## Claims

1. Apparatus for the automatic control of two mechanisms for translational movement of a bar, including a first mechanism (6) for translational movement situated in a machine tool (4) for turning, and a second mechanism (18) for translational movement situated in an installation (1) for sequential loading of such bars (2) in a tubular rotary part (3) of the machine tool (4),
- said first mechanism (6) for translational movement being made up essentially:
. of a mechanical assembly which, called adjustable headstock (7),
.. is guided translationally on the machine tool (4), along an axis of translation (8), and
.. comprises a tubular part (3) which, driven rotatingly about an axis of rotation (9) parallel to the axis of translation (8), receives an end portion of the bar (2) and bears a radial holding clamp (10) for this end portion,
. of a driving means (11), called first driving means, which is controlled by a first control means (12), and this, following two opposite directions (S1, S2) so that in the course of each machining cycle of a part (5), the mechanical assembly, called adjustable headstock (7), can undergo translational movements,
- said second translational movement mechanism (18)
. being intended to ensure functions of translational movement of a bar (2) so as to be able to obtain, in particular, the thrust of the bar (2), sequentially, through the tubular rotary part (3), until a given number of parts (5) have been made, a second translational movement mechanism (18), within the loading installation (1),
. including driving means (22) of the type controlled by steps,
the apparatus (21) for the control of the two mechanisms called first and second being **characterized in that** it comprises:
- a first element (23) consisting of an elongated ruler which includes at least a plurality of marks (230) successively disposed along its longitudinal dimension for defining a given step and indicating distinctly two opposite directions (S1, S2) of reading this first element (23) along its longitudinal dimension,
- a second element (24) consisting of a detector of marks (230) borne by the first element (23), this second element (24), on the one hand, detecting each step of a relative movement between the first element (23) and the second element (24), as well as the direction of this movement and, on the other hand, developing a signal of step and of direction of movement,
- a third element (25) and a fourth element (26), each for fixing of one of said first element (23) and second element (24), one on the adjustable headstock (7), the other on a stationary part (100) of the loading installation (1), said third element (25) and fourth element (26) being disposed in such a way that any translational movement of the adjustable headstock (7) brings about a relative translational movement between the first element (23) and the second element (24), which is of identical value and identical direction to those of the relative movement of this adjustable headstock (7),
- a fifth element (27) for applying to said second driving means (22) of the second translational movement mechanism (18), within the loading, installation (1), the signal of step and of direction of movement developed at the level of the second element (24) so as instantly to control said second driving means (22) of the loading installation (1) according to each step detected and to the direction of movement detected.

2. Apparatus according to claim 1, **characterized in that** the first element (23), viz., the ruler, is guided translationally relative to the second element (24), viz., the detector, so as to guarantee its precise positioning at least at the level of said detector.

3. Apparatus according to claim 2, **characterized in that**, so as to achieve the translational guidance:
- the first element (23), viz., the ruler, on the one hand, has along its longitudinal dimension parallel surfaces (28) intended to co-operate with guidance surfaces (29) of a guidance component, and on the other hand, is rigidly connected to the third element (25) by one of the two ends (31, 32) which it comprises,
- the fourth element (26) comprises a tubular part (260), on the one hand, in which there is fixed a guidance component (30) of the first element (23) constituted by the ruler and, on the other hand, on this tubular part (260), the second element (24), viz., the detector, is fixed, at substantially the same longitudinal level as the guidance component (30), so as to be held opposite the first element (23) in order to detect the marks (230) borne by the ruler constituting this first element (23).

4. Apparatus according to claim 1, **characterized in that** the third element (25) and the fourth element (26) support the first element (23), viz., the ruler, and the second element (24), viz., the detector, in the vicinity of the bar (2) which extends between the machine tool 4 and the loading installation (1).

5. Apparatus according to one of the claims 1 to 4, **characterized in that**:
- the first element (23), viz., the ruler, is made up
. on the one hand, of a functional part (231) which consists of a strip of material including at least a plurality of marks (230) successively disposed along the longitudinal dimension of the strip, for defining a given step and indicating distinctly two opposite directions (S1, S2) of reading this strip along its longitudinal dimension,
. on the other hand, of a structural part (232) which consists of an elongated rigid part of sectional cross-section so as to include, along its longitudinal dimension,
.. a T-shaped groove (233) having parallel surfaces (28), at least some of which are intended to co-operate with guidance surfaces (29) of a guidance component (30), and
.. a free face (234) of sufficient area to receive the strip constituting the functional part (231),
- the guidance component (30) consists of a part having a T-shaped cross-section complementary to the groove (233) of the structural part (232) of the first element (23), which guidance component (30) extends over a portion of the longitudinal dimension of the first element (23).

6. Apparatus according to any one of the claims 1 to 5, used with a machine tool (4) including an adjustable headstock (7) which
. may be masked by a part (40) of this machine tool (4) situated toward the loading installation (1),
. has a face (70), called rear face (70), which, turned toward the loading installation (1), on the one hand, is intended to be crossed by a bar (2) coming from this loading installation (1) and, on the other hand, appears through a cut-out (400) of the machine tool (4) which is traversed by this bar (2),
this apparatus being **characterized in that** the third element (25) comprises a rigid tubular brace (250), intended to be fixed to the rear face of the adjustable headstock (7) so as to be traversed by the bar (2), which tubular brace (250) is of a length at least sufficient to have an end (251), called free end (251), which:
- is situated outside the machine tool (4) when the rear face (70) of the adjustable headstock (7) is brought into a position of maximum distance from the loading installation (1),
- bears a fixing zone (252) for at least one of the elements which are the first element (23) and the second element (24), viz., the ruler and the detector.

7. Apparatus according to claim 6, **characterized in that** besides the tubular brace (250), the third element (25) comprises a plate (253) which, borne at the free end (251) of this tubular brace (250), on the one hand, is situated in a plane substantially at right angles to a longitudinal axis of said tubular brace (250) and, on the other hand, has the fixing zone (252) for at least one of the elements which are the first element (23) and the second element (24).

8. Assembly made up of a machine tool and an installation for loading bars into this machine tool for turning, comprising an automatic control apparatus according to any one of the claims 1 to 7.

## Patentansprüche

1. Gerät zur Ansteuerung von zwei Mechanismen zur translatorischen Förderung einer Stange, von denen sich ein erster Mechanismus (6) zur translatorischen Förderung, in einer Maschine (4) zur Drehbearbeitung befindet, und sich ein zweiter Mechanismus (18) zur translatorischen Förderung in einer Vorrichtung (1) zur sequenziellen Zuführung solcher Stangen (2) in einem drehenden rohrförmigen Teil der Bearbeitungsmaschine (4) befindet,
- wobei der genannte erste Mechanismus (6) zur translatorischen Förderung im Wesentlichen aus
. einer als Reitstock (7) bezeichneten mechanischen Baugruppe besteht,
.. die translatorisch auf einer Bearbeitungsmaschine (4) entlang der Translationsachse (8) geführt wird und
.. einen drehenden rohrförmigen Teil (3) aufweist, der drehend um eine zur Translationsachse (8) parallele Drehachse (9) angetrieben wird, einen Endteil der Stange (2) aufnimmt und eine Zange (10) zum radialen Halten dieses Endteils trägt,
. einem als erstes Antriebsmittel (11) bezeichneten Antriebsmittel (11) besteht, das von einem ersten Betätigungsmittel (12) betätigt wird, und dies in zwei entgegengesetzte Richtungen (S1, S2), damit im Verlauf jedes Bearbeitungszyklus eines Werkstücks (5) die als Reitstock (7) bezeichnete mechanische Baugruppe Translationsbewegungen ausführen kann,
- wobei der genannte zweite Mechanismus (18) zur translatorischen Förderung
. dazu bestimmt ist, die Funktionen zur translatorischen Förderung einer Stange (2) so zu gewährleisten, dass insbesondere der sequenzielle Vorschub der Stange (2) durch den drehenden rohrförmigen Teil (3) hindurch solange erhalten werden kann, bis eine bestimmte Anzahl von Werkstücken (5) gefertigt worden ist, zweiter, in der Zuführvorrichtung (1) befindlicher Mechanismus (18) zur translatorischen Förderung,
. der ein schrittweise betätigtes Antriebsmittel (22) aufweist,
wobei das Gerät (21) zur Ansteuerung von zwei als erster und zweiter Mechanismus bezeichneten Mechanismen, **dadurch gekennzeichnet ist, dass** es
- ein erstes Bauteil (23) aufweist, das aus einer länglichen Leiste besteht, die zumindest eine Mehrzahl von hintereinander in ihrer Längsdimension angeordneten Markierungen (230) aufweist, um einen bestimmten Schritt vorzugeben und auf unterschiedliche Weise zwei entgegengesetzte Leserichtungen (S1, S2) dieses ersten Bauteils (23) in seiner Längsdimension anzuzeigen,
- ein zweites Bauteil (24) aufweist, das aus einem vom ersten Bauteil (23) gehaltenen Markierungssensor (230) besteht, wobei dieses zweite Bauteil (24) einerseits jeden Schritt einer entsprechenden Verfahrbewegung zwischen dem ersten Bauteil (23) und dem zweiten Bauteil (24) sowie die Richtung dieser Verfahrbewegung erkennt und andererseits ein Schritt- und Fahrtrichtungssignal erstellt,
- ein drittes Bauteil (25) und ein viertes Bauteil (26) aufweist, jedes zur Befestigung eines der genannten ersten (23) und zweiten (24) Bauteile, davon eins auf dem Reitstock (7) und das andere auf einem unbeweglichen Teil (100) der Zuführvorrichtung (1), wobei die genannten ersten (23) und zweiten (24) Bauteile so angeordnet sind, dass jegliche Translationsbewegung des Reitstocks (7) zu einer entsprechenden Translationsbewegung zwischen dem ersten Bauteil (23) und dem zweiten Bauteil (24) führt, die den gleichen Wert und die gleiche Richtung hat wie die entsprechenden Verfahrbewegung dieses Reitstocks (7),
- ein fünftes Bauteil (27) aufweist, um ein im zweiten Bauteil (24) erstelltes Schritt- und Fahrtrichtungssignal so auf das genannte zweite Antriebsmittel (22) des in der Zuführvorrichtung (1) befindlichen zweiten Mechanismus (18) zur translatorischen Förderung anzuwenden, dass das genannte zweite Antriebsmittel (22) der Zuführvorrichtung (1) sofort entsprechend jedes erkannten Schritts und jeder erkannten Fahrtrichtung betätigt wird.

2. Gerät nach Anspruch 1, **dadurch gekennzeichnet, dass** das erste Bauteil (23), das heißt die Leiste, zum zweiten Bauteil (24), das heißt dem Sensor, translatorisch so geführt wird, dass ihre genaue Positionierung mindestens am genannten Sensor gewährleistet wird.

3. Gerät nach Anspruch 2, **dadurch gekennzeichnet, dass** zur Ausführung der translatorischen Führung:
- das erste Bauteil (23), das heißt die Leiste, einerseits in seiner Längsdimension parallele Flächen (28) aufweist, die dazu bestimmt sind, mit den Führungsflächen (29) eines Führungsorgans (30) zusammenzuwirken, und andererseits an einem seiner beiden Enden (31, 32), das es aufweist, mit dem dritten Bauteil (25) verbunden ist, und dies auf starre Weise,
- das vierte Bauteil (26) einerseits ein rohrförmiges Teil (260) aufweist, in dem ein Führungsorgan (30) des ersten, durch die Leiste gebildeten Bauteils (23) befestigt ist, und andererseits auf diesem rohrförmigen Teil (260) das zweite Bauteil (24), das heißt der Sensor, im Wesentlichen in derselben Längslage wie das Führungsorgan (30) befestigt ist, so dass es dem ersten Bauteil (23) gegenüberliegend gehalten wird, um die Markierungen (230) zu erkennen, welche die dieses erste Bauteil (23) bildende Leiste trägt.

4. Gerät nach Anspruch 1, **dadurch gekennzeichnet, dass** das dritte Bauteil (25) und das vierte Bauteil (26) das erste Bauteil (23), das heißt die Leiste, und das zweite Bauteil (24), das heißt den Sensor, in der Umgebung der Stange (2), die sich zwischen der Bearbeitungsmaschine (4) und der Zuführvorrichtung (1) erstreckt, halten.

5. Gerät nach einem der Ansprüche 1 bis 4, **dadurch gekennzeichnet, dass**:
- das erste Bauteil (23), das heißt die Leiste,
. einerseits, aus einem Funktionsteil (231) gebildet wird, das aus einem Werkstoffstreifen besteht, der mindestens eine Vielzahl von hintereinander in Längsdimension des Streifens angeordneten Markierungen (230) aufweist, um einen bestimmten Schritt vorzugeben und auf unterschiedliche Weise zwei entgegengesetzte Leserichtungen (S1, S2) dieses ersten Streifen in seiner Längsdimension anzuzeigen,
. andererseits aus einem Konstruktionsteil (232) gebildet wird, das aus einem starren länglichen Teil mit einem Querschnitt besteht, der so profiliert ist, dass er in seiner Längsdimension
.. eine T-förmige Nut (233) aufweist, die parallele Flächen (28) besitzt, von denen mindestens einige dazu bestimmt sind, mit den Führungsflächen (29) eines Führungsorgans (30) zusammenzuwirken, und
.. eine freie Fläche (234) ausreichender Ausdehnung aufweist, um den Streifen aufzunehmen, der den Funktionsteil (231) bildet,
- das Führungsorgan (30) aus einem Teil besteht, das einen T-förmigen Querschnitt besitzt, der zur Nut (233) des Konstruktionsteils (232) des ersten Bauteils (23) komplementär ist, wobei dieses Führungsorgan (30) sich auf einem Teilstück der Längsdimension des ersten Bauteils (23) erstreckt.

6. Gerät nach einem der Ansprüche 1 bis 5, das mit einer Bearbeitungsmaschine (4) eingesetzt wird, die einen Reitstock (7) aufweist, der
. durch einen Teil (40) dieser Bearbeitungsmaschine (4) verdeckt werden kann, der sich auf der Seite der Zuführvorrichtung (1) befindet,
. eine der Zuführvorrichtung (1) zugewandte, als Hinterseite (70) bezeichnete Seite (70) aufweist, die einerseits dazu bestimmt ist, von einer Stange (2) durchquert zu werden, die aus dieser Zuführvorrichtung (1) kommt, und andererseits durch einen Ausschnitt (400) in der Bearbeitungsmaschine (4) sichtbar ist, welcher von dieser Stange (2) durchquert wird,
wobei dieses Gerät **dadurch gekennzeichnet ist, dass** das dritte Bauteil (25) einen rohrförmigen und starren Abstandshalter (250) aufweist, der dazu bestimmt ist, so auf der Hinterseite des Reitstocks (7) befestigt zu werden, dass er von der Stange (2) durchquert wird, wobei dieser rohrförmige Abstandshalter (250) zumindest von ausreichender Länge ist, um ein als freies Ende (251) bezeichnetes Ende (251) aufzuweisen, das:
- sich außerhalb der Bearbeitungsmaschine (4) befindet, wenn die Hinterseite (70) des Reitstocks (7) in eine von der Zuführvorrichtung (1) maximal entfernte Position gebracht wird,
- einen Bereich (252) zur Befestigung an mindestens einem der vom ersten Bauteil (23) und zweiten Bauteil (24) gebildeten Bauteile, das heißt der Leiste oder dem Sensor, aufweist.

7. Gerät nach Anspruch 6, **dadurch gekennzeichnet, dass** das dritte Bauteil (25) neben dem rohrförmigen Abstandshalter (250) eine vom freien Ende (251) dieses rohrförmigen Abstandshalters (250) gehaltene Platte (253) aufweist, die einerseits in einer Ebene liegt, welche zur Längsachse des genannten rohrförmigen Abstandshalters (250) im Wesentlichen senkrecht steht, und andererseits den Befestigungsbereich (252) von mindestens einem der vom ersten Bauteil (23) und zweiten Bauteil (24) gebildeten Bauteile aufweist.

8. Von einer Bearbeitungsmaschine und einer Vorrichtung zur Zuführung von Stangen in diese Maschine zur Drehbearbeitung gebildete Einheit, die ein Gerät zur Ansteuerung nach einem der Ansprüche 1 bis 7 aufweist.
